# EUROPÄISCHE PATENTSCHRIFT

(11) **EP 1 227 705 B1**
(45) Veröffentlichungstag und Bekanntmachung des Hinweises auf die Patenterteilung: **28.11.2007**
(21) Anmeldenummer: 01129892.4
(22) Anmeldetag: 14.12.2001
(51) Int. Cl.: H05B 41/28, H05B 41/282, H02M 1/00

(54) **Betriebsgerät für Lampen mit SEPIC Wandler**
Ballast with SEPIC converter for lamps
Ballast pour lampes comprenant un convertisseur du type SEPIC

(30) Priorität: 24.01.2001 DE 10110239
(43) Veröffentlichungstag der Anmeldung: 31.07.2002
(73) Patentinhaber: Patent-Treuhand-Gesellschaft für elektrische Glühlampen mbH, 81543 München (DE)
(72) Erfinder: Weirich, Michael, Dr., 82008 Unterhaching (DE)

(56) Entgegenhaltungen:
- EP-A- 0 637 789
- ANTONIO R ET AL: "Evaluation of boost, Sepic and Cuk topologies as power factor correction stage in electronic ballast applications" 21. August 1994 (1994-08-21), POWER ELECTRONICS CONGRESS, 1994. TECHNICAL PROCEEDINGS. CIEP '94., 3RD INTERNATIONAL PUEBLA, MEXICO 21-25 AUG. 1994, NEW YORK, NY, USA,IEEE, US, PAGE(S) 51-55 , XP010159991 ISBN: 0-7803-2068-9 * Zusammenfassung * * Abbildung 2a *
- SIMONETTI D S L ET AL: "Design criteria for SEPIC and Cuk converters as power factor preregulators in discontinuous conduction mode" SIGNAL PROCESSING AND SYSTEMS CONTROL, INTELLIGENT SENSORS AND INSTRUMENTATION. SAN DIEGO, NOV. 9 - 13, 1992, PROCEEDINGS OF THE INTERNATIONAL CONFERENCE ON INDUSTRIAL ELECTRONICS,CONTROL, INSTRUMENTATION AND AUTOMATION (IECON), NEW YORK, IEEE, US, Bd. VOL. 3 CONF. 18, 9. November 1992 (1992-11-09), Seiten 283-288, XP010060709 ISBN: 0-7803-0582-5

## Beschreibung

### Technisches Gebiet

Die Erfindung geht aus von einem elektronischen Betriebsgerät gemäß dem Oberbegriff des Anspruchs 1. Insbesondere geht es um die Ausführung der Regelung einer Vorstufe des elektronischen Betriebsgeräts.

### Stand der Technik

Aus der Schrift WO96/03017 (Krummel) ist ein elektronischen Betriebsgerät zum Betrieb von Lampen bekannt, das einen zweistufigen Aufbau besitzt. Eine Vorstufe wird aus der gleichgerichteten Netzspannung betrieben und stellt eine Gleichspannung bereit. Mit dieser Gleichspannung wird ein Wechselrichter betrieben, der eine, gegenüber der Frequenz der Netzspannung, hochfrequente Wechselspannung zum Betrieb von Lampen erzeugt. Die Vorstufe hat folgende Aufgaben: Zur Reduzierung von Netzstromoberschwingungen auf vorschriftsmäßige (IEC 1000-3-2) Werte, muss sie den netzseitigen Leistungsfaktor korrigieren. Weiterhin muss sie muss eine Gleichspannung bereitstellen, die weitgehend unabhängig von Netzspannungsschwankungen ist.

In der o. g. Schrift ist die Vorstufe als Hochsetzer ausgeführt. Diese sehr verbreitete Lösung hat den Vorteil, dass sie mit wenigen Bauteilen auskommt und recht hohe Wirkungsgrade erzielt. Jedoch weist die Vorstufe mit Hochsetzer folgende Nachteile auf: Die bereitgestellte Gleichspannung ist immer größer als das Maximum der Netzspannung; sie erzeugt starke Funkstörungen; der Einschaltstrom ist hoch und zur Regelung ist ein Regler nötig, der entweder analog arbeitet, oder, falls er digital arbeitet, eine Abtastrate aufweist, die wesentlich höher ist als die Netzfrequenz. Der letzte Nachteil hat folgenden Hintergrund: Der Hochsetzer ist ein getakteter Wandler. D. h. er besitzt einen Schalter, dessen Tastverhältnis maßgeblich den Eingangsstrom beeinflusst. Unter Tastverhältnis wird im Allgemeinen das Verhältnis der Zeit, in der der Schalter eingeschaltet ist, zu der Zeit in der der Schalter ausgeschaltet ist bezeichnet. Um einen hohen Leistungsfaktor zu erzielen, muss das Tastverhältnis der Netzspannung nachgeführt werden.

Wenig verbreitet ist der Einsatz eines sog. SEPIC Wandlers in der Vorstufe. Er wird in folgender Schrift beschrieben:
R. Antonio et al.: "EVALUATION OF BOOST, SEPIC AND CUK TOPOLOGIES AS POWER FACTOR CORRECTION STAGE IN ELECTRONIC BALLAST APPLICATIONS", IEEE Power Electronics Congress CIEP, Mexico, 1994. Der SEPIC Wandler benötigt zwar mehr Bauteile, kann aber die oben erwähnten Nachteile des Hochsetzers vermeiden. Dabei spielt der in der o. g. Schrift beschriebene Modus mit nicht kontinuierlichem Stromverlauf eine wichtige Rolle: In diesem Modus kann mit konstantem Tastverhältnis beim im SEPIC Wandler enthaltenen Schalter ein Leistungsfaktor erzielt werden, der zu vorschriftsmäßigen Netzstromoberschwingungen führt.

EP 0 637 789 A1 offenbart einen Controller zur Powerfaktorkorrektur, die mit einem Hochsetzsteller, einem Tiefsetzsteller, einem Hoch-Tiefsetzer, einem SEPIC-Wandler oder einem anderen geeigneten Konverter betrieben werden kann. Die Schaltung benutzt eine komplexe Regelungsstruktur, die über eine Schätzungseinheit und eine Energieintegriereinheit einen Sollstrom errechnet, der zur Leistungsregelung herangezogen wird. Diese vorverarbeiteten Signale werden zur Regelung herangezogen, die im Abstand von einer viertel Netzwelle stattfindet. Dies ist jedoch nur aufgrund der komplexen Signalaufbereitung im Vorfeld möglich.

### Darstellung der Erfindung

Es ist Aufgabe der vorliegenden Erfindung, ein elektronisches Betriebsgerät gemäß dem Oberbegriff des Anspruchs 1 bereitzustellen, das sich die Vorteile des SEPIC Wandlers in kostengünstiger Weise zu Nutzen macht.

Diese Aufgabe wird bei einem elektronischen Betriebsgerät mit den Merkmalen des Oberbegriffs der Ansprüche 1 und 3 durch die Merkmale des kennzeichnenden Teils der Ansprüche 1 und 3 gelöst. Eine besonders vorteilhafte Ausgestaltung findet sich im Anspruch 2.

Zur Regelung der Ausgangsspannung und zur Einstellung des Leistungsfaktors des SEPIC Wandlers wird in der o. g. Schrift ein analoger Regler verwendet. Erfindungsgemäß wird zur Regelung des SEPIC Wandlers ein digitaler Regler verendet. Außerdem legen die oben dargelegten Zusammenhänge bei der Regelung des den Markt dominierenden Hochsetzers nahe, dass beim Einsatz eines digitalen Reglers, dieser eine Abtastung aufweisen muss, die die Netzfrequenz auflösen kann. In diesem Zusammenhang wird unter einem analogen Regler ein Regler verstanden, der zeitkontinuierlich Istwerte einliest, verarbeitet und Stellwerte ausgibt. Ein digitaler Regler arbeitet zeitdiskret. Die Istwerte werden nur zu diskreten Zeitpunkten abgetastet, zwischen denen Abtastintervalle liegen. Die Ausgabe eines neuen Stellwerts erfolgt ebenfalls zu diskreten Zeitpunkten. Dadurch ergeben sich Stellintervalle innerhalb derer der Stellwert konstant ist. Für den Hochsetzer hat sich herausgestellt, dass die Abtast- und Stellintervalle kürzer als 1% der Periodendauer der Netzfrequenz sein müssen, um den Erfordernissen der o.g. einschlägigen Vorschriften zu genügen.

Die Erfindung nutzt die oben angesprochene Eigenschaft eines SEPIC Wandlers, dass im Modus mit nicht kontinuierlichem Stromverlauf bei einem konstanten Tastverhältnis ein ausreichend guter Leistungsfaktor erzielt werden kann. Das Tastverhältnis wird nicht der momentanen Netzspannung nachgeführt, sondern es wird lediglich die Ausgangsspannung des SEPIC Wandlers geregelt. Die Ausgangsspannung braucht nicht in Intervallen abgetastet werden, die kürzer als 1% der Periodendauer der Netzfrequenz sind. Erfindungsgemäß sind nun die Stellintervalle, d. h. die Zeit, in der das Tastverhältnis konstant gehalten wird, mindestens so lang wie 1% der Periodendauer der Netzfrequenz. Für eine Netzfrequenz von beispielsweise 50Hz ergibt sich damit ein Stellintervall, das mindestens 0,2ms lang ist.

Eine flexible Lösung zur Realisierung des erfindungsgemäßen Reglers für die Vorstufe des elektronischen Betriebsgeräts stellt ein handelsüblicher Microcontroller dar. Da entsprechend der Erfindung im Vergleich zur Regelung eines Hochsetzers nur lange Abtastintervalle gefordert sind, kann ein kostengünstiger Microcontroller ausgewählt werden.

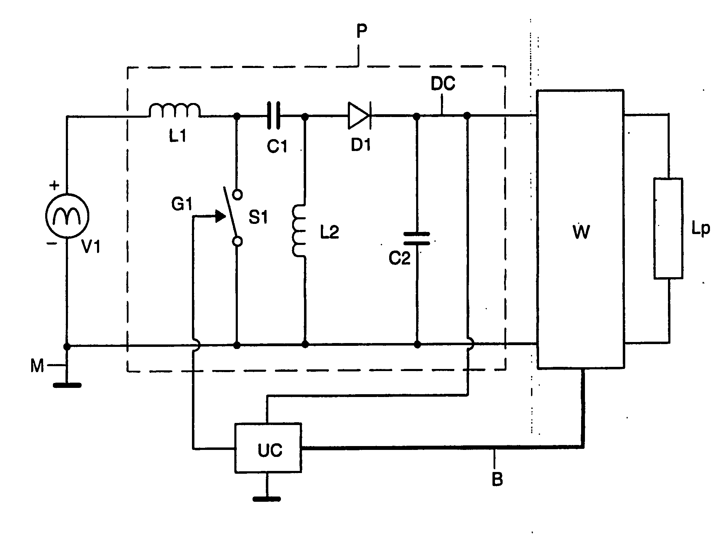

### Beschreibung der Zeichnung

Anhand eines Ausführungsbeispiels soll die Erfindung näher erläutert werden.

Im folgenden sind Kondensatoren durch den Buchstaben C, Induktivitäten durch L, Dioden durch D und Schalter durch S jeweils gefolgt von einer Zahl, bezeichnet.

Die Figur zeigt ein elektronisches Betriebsgerät mit angeschlossener Lampe und erfindungsgemäßer Vorstufe mit Regelung durch einen Microcontroller.

Das elektronische Betriebsgerät wird von einer gleichgerichteten Netzspannung V1 gespeist, die mit ihrem Minusanschluss auf dem Massepotenzial M liegt. Am Plusanschluss der gleichgerichteten Netzspannung V1 ist die Serienschaltung einer Induktivität L1 und eines Schalters S1 angeschlossen. S 1 ist mit dem Massepotenzial M verbunden. Er wird bevorzugt als Halbleiterschalter ausgeführt. Am Verbindungspunkt von L1 und S1 ist die Serienschaltung einer Kapazität C1 und einer Induktivität L2 angeschlossen. L2 ist mit dem Massepotenzial M verbunden. L1 und L2 können gekoppelt werden. Dadurch werden die produzierten Funkstörungen auf der Netzzuleitung reduziert. Am Verbindungspunkt von C1 und L2 ist die Serienschaltung einer Diode D1 und einer Kapazität C2 angeschlossen. C2 ist mit dem Massepotenzial M verbunden. Der eingerahmte Bereich P stellt die Vorstufe des elektronischen Betriebsgeräts dar. Sie enthält die Bauteile L1, L2, C1, C2, S1 und D1, die einen SEPIC Wandler bilden. An C2 stellt der SEPIC Wandler eine Gleichspannung zur Verfügung, mit der der Wechselrichter W gespeist wird. Am Ausgang des Wechselrichters W ist die Lampe Lp angeschlossen. Der Wechselrichter W wird bevorzugt als Halbbrückenwechselrichter ausgeführt. Er enthält die Ankoppelschaltung für die Lampe Lp.

Zur Regelung der Vorstufe P ist ein Microcontroller UC vorgesehen. Er tastet am Potenzial DC die Ausgangsspannung der Vorstufe P ab und gibt auf die Steuerelektrode G1 des Schalters S1 ein Signal mit einem Tastverhältnis, das zu einem gewünschten Sollwert für die Gleichspannung am Potenzial DC führt. Erfindungsgemäß erfolgt die Abtastung des Potenzials DC durch den Microcontroller UC in Abtastintervallen, die mindestens so lang sind wie 1% der Periodendauer der Netzfrequenz. Damit sind auch die Stellintervalle mindestens so lang sind wie 1 % der Periodendauer der Netzfrequenz.

Zwischen dem Microcontroller UC und dem Wechselrichter W liegt die Verbindungsleitung B. Damit kann der Microcontroller UC auch Steuer- und Regelungsaufgaben für den Wechselrichter W übernehmen. Dies wird auch bei kostengünstigen Microcontrollern UC vornehmlich dadurch möglich, dass der Microcontroller UC erfindungsgemäß nur in langen Abtastintervallen Regelaufgaben für die Vorstufe P abarbeiten muss.

Das Ausführungsbeispiel ist mit nur einer Lampe bestückt. Die Erfindung kann jedoch auch auf Anwendungen mit mehreren Lampen übertragen werden.

## Patentansprüche

1. Elektronisches Betriebsgerät für Lampen, das mit einer gleichgerichteten Netzspannung betrieben wird, aufweisend:
- eine Vorstufe in Form eines SEPIC-Wandlers (P), der im Modus mit nicht kontinuierlichen Stromverlauf betrieben wird
- einen Wechselrichter (W) geeigneter Bauart
- eine Regelungseinrichtung
**dadurch gekennzeichnet, dass** zur Regelung der Vorstufe ein digitaler Regler (UC) verwendet wird, dessen Stellintervalle mindestens so lang sind wie 1% der Periodendauer der Netzfrequenz, und der Steuer- und Regelungsaufgaben für den Wechselrichter (W) übermimmt.

2. Elektronisches Betriebsgerät nach Anspruch 1, **dadurch gekennzeichnet, dass** die Regelung der Vorstufe einen Microcontroller enthält.

3. Verfahren zum Regeln eines elektronisch Betriebsgeräts für Lampen, das einen SEPIC Wandler enthält, der mittels eines digitalen Reglers, (UC) im Modus mit nicht kontinuierlichem Stromverlauf betrieben wird und das einen Wechselrichter (W) umfasst, **dadurch gekennzeichnet, dass** das Tastverhältnis des SEPIC Wandlers in Zeitabständen verändert wird, die mindestens so lang sind wie 1% der Periodendauer der Netzfrequenz, und der digitale Regler (UC) Steuer- und Regelungsaufgaben für den Wechselrichter (W) übernimmt.

## Claims

1. Electronic ballast for lamps which is operated on a rectified mains voltage, having:
- an input stage in the form of a SEPIC converter (P), which is operated in the mode with a discontinuous current profile,
- an inverter (W) having a suitable design,
- a control device,
**characterized in that** a digital controller (UC), whose control intervals are at least as long as 1% of the period of the mains frequency and which undertakes control and regulating tasks for the inverter (W), is used to control the input stage.

2. Electronic ballast according to Claim 1, **characterized in that** the input-stage control contains a microcontroller.

3. Method for controlling an electronic ballast for lamps which contains a SEPIC converter which is operated in the mode with a discontinuous current profile by means of a digital controller (UC) and which comprises an inverter (W), **characterized in that** the duty ratio of the SEPIC converter is varied in time intervals which are at least as long as 1% of the period of the mains frequency, and the digital controller (UC) undertakes control and regulating tasks for the inverter (W).

## Revendications

1. Appareil électronique pour faire fonctionner des lampes, qui fonctionne avec une tension du secteur redressée et qui comporte :
- un étage d'attaque sous la forme d'un convertisseur SEPIC (D) qui fonctionne dans le mode ayant une variation de courant non continu
- un onduleur (W) d'un type approprié
- un dispositif de régulation
**caractérisé en ce que**, pour la régulation de l'étage d'attaque, il est utilisé un régulateur (UC) dont l'intervalle de réglage est au moins aussi long que 1 % de la période de la fréquence du secteur et qui prend en charge les tâches de commande et de régulation de l'onduleur (W).

2. Appareil électronique suivant la revendication 1, **caractérisé en ce que** la régulation de l'étage d'attaque comporte un microdispositif de commande.

3. Procédé de régulation d'un appareil électronique pour faire fonctionner des lampes, qui comporte un convertisseur SEPIC fonctionnant dans le mode à variation de courant non continu au moyen d'un régulateur (UC) numérique et qui comprend un onduleur (W), **caractérisé en ce que** l'on modifie la durée de cycle du convertisseur SEPIC dans des intervalles de temps qui sont au moins aussi longs que 1 % de la période de la fréquence du secteur, et le régulateur (UC) numérique prend en charge des tâches de commande et de régulation de l'onduleur (W).
